# EUROPÄISCHE PATENTSCHRIFT

(11) **EP 2 575 002 B1**
(45) Veröffentlichungstag und Bekanntmachung des Hinweises auf die Patenterteilung: **21.02.2018**
(21) Anmeldenummer: 11183139.2
(22) Anmeldetag: 28.09.2011
(51) Int. Cl.: G06F 9/455, G06F 11/16, G06F 1/14

(54) **Verfahren und Virtualisierungssoftware für die Bereitstellung von unabhängigen Zeitquellen für virtuelle Laufzeitumgebungen**
Method and virtualisation software for producing independent time sources for virtual runtime environments
Procédé et logiciel de virtualisation pour la préparation de sources temporelles indépendantes pour environnements d'exécution virtuels

(43) Veröffentlichungstag der Anmeldung: 03.04.2013
(73) Patentinhaber: Siemens Aktiengesellschaft, 80333 München (DE)
(72) Erfinder: Niesser, Otto, 90584 Allersberg (DE); Ünver, Halil Caglar, 90402 Nürnberg (DE)

(56) Entgegenhaltungen:
- US-A1- 2008 172 666
- US-A1- 2009 132 846
- US-A1- 2009 259 875
- US-A1- 2011 047 315
- US-B1- 7 475 002

## Beschreibung

Die Erfindung betrifft ein Verfahren für die Bereitstellung von zumindest zwei voneinander unabhängigen Zeitquellen für zumindest ein Echtzeit-Betriebssystem gemäß dem Oberbegriff des Patentanspruchs 1, und eine Virtualisierungssoftware für ein Datenverarbeitungsgerät mit mehreren Prozessorkernen gemäß dem Oberbegriff des Patentanspruchs 9.

Für Automatisierungsaufgaben, bei denen eine erhöhte Anforderung an die Betriebssicherheit gestellt wird, kommen sog. fehlersichere Automatisierungssysteme zum Einsatz, bei denen durch technische Maßnahmen gewährleistet wird, dass auch beim Ausfall oder bei der Störung einzelner Komponenten ein sicherer Betrieb weiterhin gewährleistet ist bzw. eine Anlage o.ä. in einen sicheren Zustand versetzt wird. Eine wichtige Maßnahme zur Erfüllung solcher Anforderungen besteht darin, dass wichtige Betriebsmittel oder Komponenten mehrfach und unabhängig voneinander vorgesehen werden, so dass zumindest eine Störung einer einzelnen Komponente registriert werden kann. Bei hochverfügbaren Systemen könnte idealer Weise auch der Weiterbetrieb mit der redundanten Ersatzkomponente erfolgen.

Im Folgenden soll als eine wichtige Ressource fehlersicherer Automatisierungssystem eine sog. Zeitquelle betrachtet werden, also eine Komponente, die einen Takt, eine Uhrzeit oder eine ähnliche Zeitinformation bereitstellt, die von einem Automatisierungsprogramm oder einem zugrundeliegenden Betriebssystem benötigt wird, um Aufgaben im richtigen Takt, mit der richtigen Geschwindigkeit und zuverlässig zu erledigen.

Während im Stand der Technik häufig spezielle fehlersichere Steuerungseinrichtungen, sog. F-CPU's ("Fail-Save Central Processing Unit") oder F-PLC's ("Fail-Save Programmable Logic Controller") zum Einsatz kommen, also speziell mit redundanten Komponenten versehene speicherprogrammierbare Steuerungen, werden zunehmend Personal-Computer oder ähnliche standardisierte Architekturen mit Echtzeit-Betriebssystemen ausgestattet und für Steuerungs- und Automatisierungsaufgaben eingesetzt. Auch bei einer Standardarchitektur wie beispielsweise einem Personal-Computer ist es prinzipiell möglich, zwei voneinander unabhängige Zeitquellen für ein Echtzeit-Betriebssystem mit entsprechender Sicherheitsanforderung bereitzustellen. Wichtig ist, dass beide Zeitquellen voneinander unabhängig sind, also insbesondere in Bezug auf ihre Hardware von unterschiedlichen Taktquellen (zumeist auf Quarz-Oszillatoren basierend) abgeleitet sind. In Bezug auf die Personal-Computer wird dazu häufig auf der einen Seite ein Echtzeit-Uhrenbaustein (häufig RTC = "Real Time Clock" genannt) verwendet und auf der anderen Seite ein spezieller Zähler der CPU, der sog. Time-Stamp-Counter (TSC). Während der Echtzeit-Uhrenbaustein sein Taktsignal aus einem speziell dafür vorgesehenen Quarz (Quarz-Oszillator) bezieht, wird der Time-Stamp-Counter aus dem Takt des Prozessors (CPU-Takt) abgeleitet, und ist somit unabhängig vom RTC-Takt. Auf diese Weise ist es auch bislang schon möglich, einem fehlersicheren Automatisierungssystem, welches auf einer PC-Hardware o.ä. realisiert ist, zwei voneinander unabhängige Zeitquellen bereitzustellen.

Im Bereich der Steuerungstechnik werden inzwischen vermehrt Virtualisierungstechniken eingesetzt. Dies bedeutet, dass auf ein- und derselben Hardware-Plattform mehrere virtuelle Maschinen mit jeweils einem Betriebssystem betrieben werden, wobei zumindest eines der Betriebssysteme unter sog. "Echtzeit-Bedingungen" ablaufen kann und eine als Software realisierte "fehlersichere" Automatisierungskomponente, eine sog. Fail-Save-CPU, bilden kann. Es bietet sich an, für solche Einsatzgebiete eine Hardware-Plattform mit mehreren Prozessoren oder mehreren Prozessor-Kernen, sog. Multicore-CPU's einzusetzen, wobei der virtuellen Maschine mit dem fehlersicheren Echtzeit-Betriebssystem beispielsweise exklusiv eine CPU oder ein Prozessorkern zugeordnet werden kann. Während auch bei solchen Konstellationen jeder Prozessor oder jeder Prozessor-Kern einen Time-Stamp-Counter aufweist, welcher vom Prozessortakt abgeleitet ist, ergibt sich bei solchen "virtualisierten" Anordnungen das Problem des gemeinsamen Zugriffs auf nur einmal vorhandene Ressourcen, speziell den beispielhaft genannten RTC-Baustein. Eine Virtualisierung einer solchen nur einmal vorhandenen Ressource ist zwar prinzipiell möglich, so dass jede in einer virtuellen Maschine ablaufende Einheit ("virtualisiertes Betriebssystem") Zugriff erlangt und beispielsweise einen RTC-Baustein auslesen kann, jedoch führt zwingend jegliche Interaktion mit der Virtualisierungssoftware, dem sog. "Hypervisor", zu einer Unterbrechung der Ausführung der anfragenden virtuellen Maschine, was zu einer Verschlechterung der Echtzeitperformance führt, insbesondere durch dadurch bedingte Latenzzeiten. Dies betrifft insbesondere die Systeme, bei denen mehr als ein "virtualisiertes Automatisierungssystem" auf ein- und derselben Hardware-Plattform betrieben wird, so dass eine benötigte Ressource, insbesondere der angesprochene Uhrenbaustein RTC, nicht exklusiv für das einzige vorhandene Automatisierungssystem zur Verfügung gestellt werden kann. Solche Systeme sind zum Beispiel aus der veröffentlichen Patentanmeldung US 2009/0132846 (Song) bekannt. Dieses Dokument offenbart die Implementierung mehrerer virtualisierten Systeme auf einer einzigen Hardware-Plattform. Zumindest eines dieser Systeme ist ein Echtzeit-Betriebssystem. Das Dokument offenbart ebenfalls mehrere Hardware-Zeitgeber, deren Zeitsignale über die virtualisierten Systeme verteilt werden.

Es ist also eine Aufgabe der vorliegenden Erfindung, eine zentrale Ressource mehreren virtuellen Maschinen zur Verfügung zu stellen, ohne dass Zugriffe auf diese Ressource zu Einbußen bei der Ausführung der virtuellen Maschinen führen.

Es ist eine Kernidee der Lösung der vorliegenden Aufgabe, die nutzbaren Informationen einer gemeinsam genutzten Ressource den virtuellen Maschinen direkt, also ohne "Aussprung" in eine Virtualisierungssoftware, lesbar zur Verfügung zu stellen, wobei die Aktualisierung dieser Informationen Interruptgesteuert durch die Virtualisierungssoftware gewährleistet wird.

Die Lösung der Aufgabe sieht insbesondere ein Verfahren nach Patentanspruch 1 und eine Virtualisierungssoftware nach Patentanspruch 9 vor.

Dabei wird ein Verfahren für die Bereitstellung von zumindest zwei voneinander unabhängigen Zeitquellen für zumindest ein Echtzeit Betriebssystem eines Datenverarbeitungsgerätes mit zumindest zwei virtuellen Laufzeitumgebungen vorgeschlagen, wobei in einer ersten der virtuellen Laufzeitumgebungen ein allgemeines Betriebssystem und in einer zweiten der virtuellen Laufzeitumgebungen das Echtzeit-Betriebssystem abläuft, wobei durch eine Virtualisierungssoftware die virtuellen Laufzeitumgebungen verwaltet werden, und wobei der ersten virtuellen Laufzeitumgebung ein erster Prozessorkern und der zweiten virtuellen Laufzeitumgebung ein zweiter Prozessorkern zugeordnet wird. Dabei wird dem zumindest einen Echtzeit-Betriebssystem eine erste Zeitquelle exklusiv zugeordnet, wobei das Datenverarbeitungsgerät eine von der ersten Zeitquelle unabhängige zweite Zeitquelle aufweist, wobei die zweite Zeitquelle zur periodischen Erzeugung eines - vorteilhaft im Interrupt-Controller als IPI-Init-Signal (Inter-Processor-Interrupt - Initialization) oder als ein anderes separat zu behandelndes Ereignis konfigurierten - Interrupts konfiguriert ist. Dabei ist der erste Prozessorkern mit der virtuellen Laufzeitumgebung mit dem allgemeinen Betriebssystem derart eingerichtet, dass bei jedem durch die zweite Zeitquelle ausgelösten Interrupt anstelle einer - beispielsweise nach dem Init-Signal üblichen - Neu-Initialisierung des ersten Prozessorkerns in die Virtualisierungssoftware eingesprungen wird, wobei durch die Virtualisierungssoftware der Inhalt zumindest einer durch das Echtzeit-Betriebssystem lesbaren Speicherzelle aktualisiert wird, und wobei das Echtzeit-Betriebssystem diese Speicherzelle als von der ersten Zeitquelle unabhängige Zeitquelle zur Kontrolle der ersten Zeitquelle verwendet. Durch das beschriebene Verfahren ist es möglich, für das Echtzeit-Betriebssystem die zweite Zeitquelle derart nachzubilden, dass für deren Aktualisierung eine Unterbrechung der virtuellen Maschine mit dem Echtzeitbetriebssystem nicht erforderlich ist.

Die Lösung der Aufgabe sieht außerdem eine Virtualisierungssoftware für ein Datenverarbeitungsgerät mit mehreren Prozessorkernen vor, wobei das Datenverarbeitungsgerät mit einem allgemeinen Betriebssystem und mit zumindest einem Echtzeit-Betriebssystem ausgestattet ist. Dabei ist die Virtualisierungssoftware zur Konfigurierung des Datenverarbeitungsgerätes für den Betrieb des vorstehend beschriebenen Verfahrens eingerichtet, wobei die Virtualisierungssoftware zur Aktualisierung der zumindest einen als unabhängige Zeitquelle verwendeten Speicherzelle nach einem von der zweiten Zeitquelle initiierten Interrupts eingerichtet ist. Durch eine solche Virtualisierungssoftware lassen sich die in Bezug auf das Verfahren geschilderten Vorteile realisieren.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für die erfindungsgemäße Virtualisierungssoftware. Die beschriebenen vorteilhaften Ausgestaltungen können entweder einzeln, aber auch in freier Kombination miteinander realisiert werden.

Vorteilhaft wird als die erste Zeitquelle ein Time-Stamp-Counter desjenigen Prozessorkerns verwendet, auf dem die zweite virtuelle Laufzeitumgebung mit dem Echtzeit-Betriebssystem abläuft. Der Vorteil liegt zum einen darin, dass ein Auslesen des Time-Stamp-Counters ohne Aussprung in die Virtualisierungssoftware (Hypervisor) möglich ist. Zum anderen steht ein eigener Time-Stamp-Counter für jeden Prozessorkern zur Verfügung, wodurch in der bevorzugten Architektur, bei der jede kritische Laufzeitumgebung exklusiv zumindest einen Prozessorkern beanspruchen kann, der Vorteil resultiert, dass der Time-Stamp-Counter der virtuellen Laufzeitumgebung mit dem Echtzeitbetriebssystem exklusiv zur Verfügung steht, ohne von anderen Laufzeitumgebungen und anderen Betriebssystemen beeinflusst zu werden. Dies ist insbesondere dann von Vorteil, wenn mehrere Echtzeit-Betriebssysteme mit mehreren virtuellen Umgebungen vorhanden sind.

Vorteilhaft wird als die zweite Zeitquelle ein Echtzeit-Uhrenbaustein des Datenverarbeitungsgerätes verwendet. Ein solcher RTC-Baustein ist mit einem vom Prozessor-Takt unabhängigen Taktgeber (Quarz-Oszillator) ausgestattet. Vorteilhaft findet dabei durch die Virtualisierungssoftware eine sog. "Virtualisierung" des RTC-Bausteins gegenüber der ersten virtuellen Laufzeitumgebung statt. Dies bedeutet, dass direkte Zugriffe des allgemeinen Betriebssystems auf den RTC-Baustein bzw. auf dessen Register von der Virtualisierungssoftware entweder verhindert oder zumindest kontrolliert werden. Dadurch werden die Betriebssicherheit und die Zuverlässigkeit der Zeitinformation des RTC-Bausteins erhöht.

In ähnlicher Weise muss der Peripherie-seitige Interrupt-Controller (IO-APIC) "virtualisiert" werden. Dadurch wird verhindert, dass die Gast-Betriebssysteme diesen Baustein unbefugt um-konfigurieren. Es sollen darüber hinaus nicht jegliche Interrupt-Anforderungen dieses Bausteins dazu führen, dass der Prozessorkern mit dem allgemeinen Betriebssystem (Kern 0) in den Kontext der Virtualisierungssoftware wechselt und dort entschieden wird, ob und, wenn ja, auf welche Weise ein Interrupt verarbeitet wird. Dies hat für die Performance den Vorteil, dass nicht jeglicher Interrupt zu Unterbrechungen der virtuellen Laufzeitumgebungen mit den Echtzeitbetriebssystemen führt. In einer weiteren vorteilhaften Ausgestaltung können auch die lokalen Interrupt-Controller (LO-APIC) der Prozessorkerne virtualisiert werden.

Wie bereits erwähnt, können vorteilhaft auf der Datenverarbeitungseinrichtung mehrere zweite virtuelle Laufzeitumgebungen mit jeweils einem Echtzeit-Betriebssystem bzw. jeweils einem Betriebssystem mit erhöhter Sicherheitsanforderung ("F-System"; "Fail-Save System") eingerichtet werden, wobei jeder dieser zweiten virtuellen Laufzeitumgebungen je ein eigener Prozessorkern zugeordnet wird. Dadurch, dass jede dieser zweiten virtuellen Laufzeitumgebungen zum Abgleich ihrer eigenen "privaten" ersten Zeitquelle lediglich auf eine Speicherzelle oder ein Register als zweite Zeitquelle zugreifen muss, kann ein solcher Abgleich ohne Aussprung ("VM-Exit") in die Virtualisierungssoftware (Hypervisor, VMM = Virtual-Machine-Monitor) erfolgen. Da auf die Speicherzelle bzw. das Register mit der "zweiten Zeitinformation" durch die virtuellen Maschinen nur lesend zugegriffen wird, können alle zweiten virtuellen Laufzeitumgebungen dieselben Speicherzellen oder Register als zweite Zeitquelle benutzen. In einer vorteilhaften Ausgestaltung kann jedoch ohne bedeutenden Mehraufwand für jede dieser zweiten virtuellen Laufzeitumgebungen eine eigene, separate Speicherzelle, Register o.ä. geführt werden, so dass es beispielsweise möglich ist, für jede virtuelle Laufzeitumgebung ein anderes "Darstellungsformat", einen anderen "Nullpunkt" etc. zu wählen. Im einfachsten Fall geschieht das Aktualisieren der Speicherzelle oder der Speicherzellen durch einfaches Inkrementieren ihres Inhaltes; selbstverständlich sind auch andere Konventionen wählbar.

Ein Ausführungsbeispiel des erfindungsgemäßen Verfahrens wird nachfolgend anhand der Zeichnungen näher erläutert. Es dient gleichzeitig der Erläuterung einer erfindungsgemäßen Virtualisierungssoftware.

Dabei zeigt die einzige Zeichnung in schematischer Darstellung die Architektur eines Datenverarbeitungsgerätes mit mehreren Prozessorkernen, mehreren virtuellen Laufzeitumgebungen und eine gemeinsam genutzte Hardware.

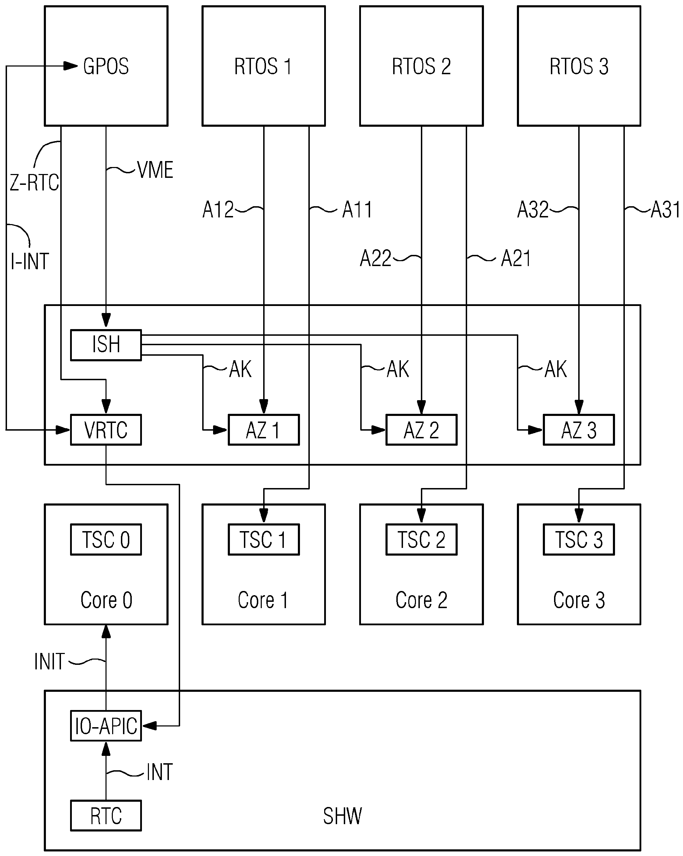

In der Figur 1 ist schematisch eine Hardware-Architektur dargestellt, in der vier Prozessorkerne Core0, ..., Core3 verfügbar sind. Mittels einer Virtualisierungssoftware ("Virtual Machine Monitor"), im Folgenden "Hypervisor" genannt, werden vier virtuelle Laufzeitumgebungen (Virtual Machines) erzeugt, wobei in der ersten virtuellen Laufzeitumgebung ein allgemeines Betriebssystem GPOS (General Purpose Operation System), z.B. Microsoft Windows oder Linux, installiert ist, welches auf dem ersten Prozessorkern Core0 ausgeführt wird. Den restlichen Prozessorkernen Core1, Core2, Core3 ist jeweils eine virtuelle Laufzeitumgebung mit jeweils einem Echtzeitbetriebssystem RTOS1, ROTS2, RTOS3 zugeordnet. Die Computer-Architektur weist gemeinsame Hardware SHW ("Shared Hardware") auf, wobei hier exemplarisch ein Echtzeit-Uhrenbaustein RTC betrachtet werden soll. Die Prozessoren bzw. Prozessorkerne Core0, ..., Core3 weisen jeweils einen Time-Stamp-Counter TSC0, ..., TSC3 auf, wobei es sich dabei um Zeitzähler handelt, die aus dem Prozessortakt gespeist werden. Der Echtzeit-Uhrenbaustein RTC weist hingegen einen separaten Taktgeber (Quarz) auf.

Ziel des nachstehend beschriebenen Verfahrens ist es, den Echtzeitbetriebssystemen RTOS1, RTOS2, RTOS3 zum einen jeweils den Time-Stamp-Counter TSC1, TSC2, TSC3 des zugeordneten Prozessorkerns Core1, Core2, Core3 zuzuordnen, wobei die Time-Stamp-Counter TSC1, TSC2, TSC3 jeweils als sog. "erste Zeitquelle" exklusiv vom jeweiligen Echtzeit-Betriebssystem RTOS1, RTOS2, RTO3 benutzt werden. Weiter soll als gemeinsam benutzte Ressource der Echtzeit-Uhrenbaustein RTC bzw. dessen Zeitinformation den Echtzeit-Betriebssystemen RTOS1, RTOS2, RTOS3 zur Verfügung gestellt werden, ohne dass ein Zugriff auf die Zeitinformation einen Aussprung des jeweiligen Echtzeit-Betriebssystems RTOS1, RTOS2, RTOS3 bzw. der diese unterstützenden virtuellen Laufzeitumgebungen in den Hypervisor bedingt.

Nicht dargestellt ist ein sog. High Precision Event Timer (HPET), der ebenfalls vom Prozessortakt abhängig ist und der bei manchen Architekturen den Interrupt des Echtzeit-Uhrenbausteins RTC benutzen kann. An dieser Stelle sei darauf hingewiesen, dass in solchen Architekturen dieser HPET ebenfalls "virtualisiert" werden sollte, um die Nutzung des dem RTC-Baustein zugeordneten Interrupts durch diesen HPET zu unterbinden. Aus Gründen der Übersichtlichkeit ist dies jedoch in der Figur nicht dargestellt und wird an dieser Stelle auch nicht weiter beschrieben.

Im Folgenden sei davon ausgegangen, dass das allgemeine Betriebssystem GPOS den Echtzeit-Uhrenbaustein RTC als Zeitquelle benötigt, was beispielsweise beim bekannten Betriebssystem Microsoft Windows der Fall ist. Auf die alternative Verwendung eines HPET soll hier, wie gesagt, nicht weiter eingegangen werden. Die aus den Registern eines Echtzeit-Uhrenbausteins RTC auslesbare Zeitinformation ist für die Belange der hier betrachteten Echtzeit-Betriebssysteme RTOS1, RTOS2, RTOS3 nicht "feingranular" genug, was bedeutet, dass ein einfaches Auslesen des entsprechenden Registerinhalts nicht zur genauen Kontrolle der Zeitinformationen aus den Time-Stamp-Countern TSC1, TSC2, TSC3 verwendbar ist. Daher soll der Echtzeit-Uhrenbaustein RTC nun so programmiert werden, dass er periodisch einen Interrupt INT auslöst, wobei die Wiederholgenauigkeit der Auslösung des Interrupts INT durchaus den genannten Genauigkeitsanforderungen entspricht. Zunächst wird der Echtzeit-Uhrenbaustein RTC, gegenüber dem allgemeinen Betriebssystem GPOS "virtualisiert", so dass sämtliche Zugriffe Z-RTC seitens des Echtzeit-Betriebssystems GPOS auf die Register des Echtzeit-Uhrenbausteins RTC durch eine entsprechende Instanz des Hypervisors abgefangen werden. Zugriffe auf die tatsächlichen Register des Echtzeit-Uhrenbausteins RTC und vorteilhaft auch auf den Interrupt-Controller IO-APIC finden nunmehr nahezu ausschließlich durch den Hypervisor statt. Der genannte Interrupt-Mechanismus des Echtzeit-Uhrenbausteins RTC wird nun im Interrupt-Controller IO-APIC als Init-Signal INIT oder als ein anderer nichtmaskierbarer Interrupt, beispielsweise als IPI-Start-Signal, parametriert. Dies erlaubt es, im Hypervisor auf die vom Echtzeit-Uhrenbaustein RTC generierten Interrupts INT hin zu unterbrechen (VM Exit, Security Exeption SX), ohne dass dabei andere Interrupt-Quellen behandeln werden müssen. Somit können also beliebige andere Interrupts von den zuständigen Betriebssystemen selbst bearbeitet werden, und trotzdem erreicht werden, dass ein Interrupt des Echtzeit-Uhrenbausteins RTC zu einem Aussprung (Kontext-Wechsel) der virtuellen Maschine mit dem allgemeinen Betriebssystem GPOS in den Hypervisor führt.

In diesem Zusammenhang ist darauf zu achten, dass die maximale Verarbeitungszeit ("Aufenthaltsdauer") einer beliebigen Anforderung an den Hypervisor kürzer ist, als das im Echtzeit-Uhrenbaustein RTC eingestellte Interrupt-Intervall. Somit wird verhindert, dass ein weiterer Interrupt INT bearbeitet werden muss, bevor die Kontrolle an die virtuelle Maschine mit dem allgemeinen Betriebssystem GPOS zurückgegeben worden ist. Hier sei darauf hingewiesen, dass die Ausführung des Hypervisors auf dem ersten Prozessorkern Core0 geschieht, so dass der Interrupt-bedingte Aussprung VME in den Hypervisor (VM-Exit, Security Exeption SX) bzw die dortige Service-Routine ISH (Init-Signal Handler) ohne Einfluss auf die anderen virtuellen Maschinen mit den Echtzeit-Betriebssystemen RTOS1, RTOS2, RTOS3 erfolgt.

Durch den Hypervisor werden den Echtzeit-Betriebssystemen RTOS1, RTOS2, RTOS3 jeweils Speicherzellen AZ1, AZ2, AZ3 ("alternative Zeitquellen") oder Register zugeordnet, die diesen Echtzeit-Betriebssystem RTOS1, RTOS2, RTOS3 als zweite Zeitquelle dienen. Die Inhalte dieser Speicherzellen AZ1, AZ2, AZ3 oder Register werden durch den Hypervisor bzw die dortige Service-Routine ISH bei jedem durch den Echtzeit-Uhrenbaustein RTC generierten oder ausgelösten Interrupt INT und das dadurch erzeugte INIT-Signal aktualisiert, beispielsweise durch Inkrementieren eines numerischen Wertes in diesen Speicherzellen AZ1, AZ2, AZ3 bzw. Registern. Durch lesenden Zugriff A12, A22, A32 auf diese Speicherzellen AZ1, AZ2, AZ3 bzw. Register können die so erzeugten zweiten Zeitquellen jederzeit benutzt werden. Ein Abgleich der ersten Zeitquellen TSC1, TSC2, TSC3 erfolgt beispielsweise durch zeitnahes Auslesen A11, A21, A31 dieser Register und Vergleich mit den numerischen Werten der Speicherzellen AZ1, AZ2, AZ3 bzw. der verwendeten, inkrementierten Register.

Die zuvor beschriebene Parametrierung des Interrupt-Controllers hinsichtlich des Uhrenbaustein-Interrupts INT bedingt in vielen Fällen die Virtualisierung dieses Controllers gegenüber dem allgemeinen Betriebssystem GPOS. Sofern das allgemeine Betriebssystem GPOS den (nunmehr virtualisierten) Echtzeit-Uhrenbaustein VRTC als Zeitquelle nutzt, wird bei der Behandlung des INIT-Signals abhängig vom benötigten Takt ein von einem virtualiserten Uhrenbaustein VRTC generierter RTC-Interrupt I-INT in das allgemeine Betriebssystem GPOS "injiziert" (z.B. per Interrupt-Injection oder per Inter-Prozessor-Interrupt durch den Lokalen Interrupt-Baustein LO-APIC). Zur Steigerung der Verarbeitungsleistung ist es möglich, das allgemeine Betriebssystem GPOS derart zu parametrieren, dass die sonst notwendige Quittierung des RTC-Interrupts I-INT unterbleibt.

Bei manchen Prozessoren kann während der Laufzeit des Hypervisors, also während eines "VM-Exit", das INIT-Signal nicht zugestellt werden. Dies impliziert z.B. die bereits beschriebene maximale "Verweildauer", die, wie beschrieben, deutlich kleiner als der gewählte RCT-Takt sein muss. Bei einer Beendigung ("Shut-Down") des allgemeinen Betriebssystems GPOS kann es zu Zuständen kommen, in denen die zugeordnete virtuelle Maschine kaum oder überhaupt nicht mehr ausgeführt werden muss, so dass der zugeordnete Prozessorkern Core0 permanent den Kontext des Hypervisors ausführt und somit ein INIT-Signal nicht zustellbar ist. In solchen Fällen kann in der entsprechenden virtuellen Maschine (virtuelle Laufzeitumgebung) ein Rumpf-Betriebssystem oder eine vergleichbare Software gestartet werden, so dass der Hypervisor entsprechend verlassen werden kann bzw. muss.

## Patentansprüche

1. Verfahren für die Bereitstellung von zumindest zwei voneinander unabhängigen Zeitquellen für zumindest ein Echtzeit-Betriebssystem (RTOS1, RTOS2, RTOS3) eines Datenverarbeitungsgerätes mit zumindest zwei virtuellen Laufzeitumgebungen,
wobei in einer ersten der virtuellen Laufzeitumgebungen ein allgemeines Betriebssystem (GPOS)und in einer zweiten der virtuellen Laufzeitumgebungen das Echtzeit-Betriebssystem (RTOS1, RTOS2, RTOS3) abläuft,
wobei durch eine Virtualisierungssoftware die virtuellen Laufzeitumgebungen verwaltet werden, und
wobei der ersten virtuellen Laufzeitumgebung ein erster Prozessorkern (COR0) und der zweiten virtuellen Laufzeitumgebung ein zweiter Prozessorkern (CORE1, CORE2, CORE3) zugeordnet wird,
**dadurch gekennzeichnet,**
**dass** dem zumindest einen Echtzeit-Betriebssystem (RTOS1, RTOS2, RTOS3)eine erste Zeitquelle (TSC1, TSC2, TSC3) exklusiv zugeordnet wird,
**dass** das Datenverarbeitungsgerät eine von der ersten Zeitquelle (TSC1, TSC2, TSC3) unabhängige zweite Zeitquelle (RTC) aufweist, wobei
die zweite Zeitquelle zur periodischen Erzeugung eines Interrupts (INT) konfiguriert ist, wobei
der erste Prozessorkern (CORE0) mit der virtuellen Laufzeitumgebung mit dem allgemeinen Betriebssystem (GPOS) derart eingerichtet ist, dass bei jedem durch die zweite Zeitquelle (RTC) ausgelösten Interrupt (INT) in die Virtualisierungssoftware eingesprungen wird, wobei
die Virtualisierungssoftware den Inhalt zumindest einer durch das Echtzeit-Betriebssystem (RTOS1, RTOS2, RTOS3) lesbaren Speicherzelle (AZ1, AZ2, AZ3) aktualisiert, wobei das Echtzeit-Betriebssystem (RTOS1, RTOS2, RTOS3) diese Speicherzelle (AZ1, AZ2, AZ3) als von der ersten Zeitquelle (TSC1, TSC2, TSC3) unabhängige Zeitquelle verwendet.

2. Verfahren nach Patentanspruch 1,
**dadurch gekennzeichnet,**
**dass** die zweite Zeitquelle zur periodischen Erzeugung eines als Init-Signal (INIT), als Start-Signal oder als Nichtmaskierbarer Interrupt konfigurierten Interrupts (INT) eingerichtet ist.

3. Verfahren nach einem der vorherigen Patentansprüche,
**dadurch gekennzeichnet,**
**dass** als die erste Zeitquelle (TSC1, TSC2, TSC3) ein Time-Stamp-Counter (TSC1, TSC2, TSC3) desjenigen Prozessorkerns (CORE1, CORE2, CORE3) verwendet wird, auf dem die zweite virtuelle Laufzeitumgebung mit dem Echtzeit-Betriebssystem (RTOS1, RTOS2, RTOS3) abläuft.

4. Verfahren nach einem der vorherigen Patentansprüche,
**dadurch gekennzeichnet,**
**dass** als die zweite Zeitquelle (RTC) ein Echtzeit-Uhrenbaustein des Datenverarbeitungsgerätes verwendet wird.

5. Verfahren nach Patentanspruch 4,
**dadurch gekennzeichnet,**
**dass** die Virtualisierungssoftware zur Virtualisierung des Echtzeit-Uhrenbausteins (RTC) gegenüber der ersten virtuellen Laufzeitumgebung verwendet wird.

6. Verfahren nach einem der vorhergehenden Patentansprüche,
**dadurch gekennzeichnet,**
**dass** die Virtualisierungssoftware zur Virtualisierung des oder der Interrupt-Controller (IO-APIC) gegenüber dem allgemeinen Betriebssystem (GPOS)verwendet wird.

7. Verfahren nach einem der vorhergehenden Patentansprüche,
**dadurch gekennzeichnet,**
**dass** auf der Datenverarbeitungseinrichtung mehrere zweite virtuelle Laufzeitumgebungen mit jeweils einem Echtzeit-Betriebssystem (RTOS1, RTOS2, RTOS3) eingerichtet werden, wobei jeder dieser zweiten virtuellen Laufzeitumgebungen je ein eigener Prozessorkern (CORE1, CORE2, CORE3) zugeordnet wird.

8. Verfahren nach Patentanspruch 7,
**dadurch gekennzeichnet, dass**
für jede zweite virtuelle Laufzeitumgebung jeweils zumindest eine separate Speicherzelle (AZ1, AZ2, AZ3) aktualisiert wird.

9. Verfahren nach einem der vorhergehenden Patentansprüche,
**dadurch gekennzeichnet,**
**dass** die Virtualisierungssoftware den Inhalt einer durch das Echtzeit-Betriebssystem (RTOS1, RTOS2, RTOS3) lesbaren Speicherzelle (AZ1, AZ2, AZ3) durch das Inkrementieren eines in dieser Speicherzelle (AZ1, AZ2, AZ3) gespeicherten numerischen Wertes aktualisiert.

10. Virtualisierungssoftware für ein Datenverarbeitungsgerät mit mehreren Prozessorkernen (CORE0, CORE1, CORE2, CORE3), einem allgemeinen Betriebssystem (GPOS)und zumindest einem Echtzeit-Betriebssystem (RTOS1, RTOS2, RTOS3),
**dadurch gekennzeichnet,**
**dass** die Virtualisierungssoftware zur Konfigurierung des Datenverarbeitungsgerätes für den Betrieb eines Verfahrens gemäß einem der vorhergehenden Ansprüche eingerichtet ist,
wobei die Virtualisierungssoftware zur Aktualisierung der zumindest einen als unabhängige Zeitquelle verwendeten Speicherzelle (AZ1, AZ2, AZ3) nach einem von der zweiten Zeitquelle (RTC) initiierten Interrupts (INT) eingerichtet ist.

## Claims

1. Method for providing at least two mutually independent time sources for at least one real-time operating system (RTOS1, RTOS2, RTOS3) of a data processing device with at least two virtual runtime environments,
a general-purpose operating system (GPOS) running in a first of the virtual runtime environments and the real-time operating system (RTOS1, RTOS2, RTOS3) running in a second of the virtual runtime environments,
the virtual runtime environments being managed by virtualization software, and
a first processor core (CORE0) being assigned to the first virtual runtime environment and a second processor core (CORE1, CORE2, CORE3) being assigned to the second virtual runtime environment,
**characterized**
**in that** a first time source (TSC1, TSC2, TSC3) is exclusively assigned to the at least one real-time operating system (RTOS1, RTOS2, RTOS3),
**in that** the data processing device has a second time source (RTC) independent of the first time source (TSC1, TSC2, TSC3), the second time source being configured to periodically generate an interrupt (INT),
the first processor core (CORE0) with the virtual runtime environment with the general-purpose operating system (GPOS) being set up in such a manner that, with each interrupt (INT) triggered by the second time source (RTC), a jump is made to the virtualization software,
the virtualization software updating the content of at least one memory cell (AZ1, AZ2, AZ3) which can be read by the real-time operating system (RTOS1, RTOS2, RTOS3), the real-time operating system (RTOS1, RTOS2, RTOS3) using this memory cell (AZ1, AZ2, AZ3) as a time source, which is independent of the first time source (TSC1, TSC2, TSC3).

2. Method according to Patent Claim 1,
**characterized**
**in that** the second time source is set up to periodically generate an interrupt (INT) configured as an initialization signal (INIT), a start signal or a non-maskable interrupt.

3. Method according to one of the preceding patent claims,
**characterized**
**in that** a time-stamp counter (TSC1, TSC2, TSC3) of that processor core (CORE1, CORE2, CORE3) on which the second virtual runtime environment with the real-time operating system (RTOS1, RTOS2, RTOS3) runs is used as the first time source (TSC1, TSC2, TSC3).

4. Method according to one of the preceding patent claims,
**characterized**
**in that** a real-time clock module of the data processing device is used as the second time source (RTC).

5. Method according to Patent Claim 4,
**characterized**
**in that** the virtualization software is used to virtualize the real-time clock module (RTC) with respect to the first virtual runtime environment.

6. Method according to one of the preceding patent claims,
**characterized**
**in that** the virtualization software is used to virtualize the interrupt controller(s) (IO-APIC) with respect to the general-purpose operating system (GPOS).

7. Method according to one of the preceding patent claims,
**characterized**
**in that** a plurality of second virtual runtime environments each with a real-time operating system (RTOS1, RTOS2, RTOS3) are set up on the data processing device, each of these second virtual runtime environments being assigned its own processor core (CORE1, CORE2, CORE3).

8. Method according to Patent Claim 7,
**characterized**
**in that** at least one separate memory cell (AZ1, AZ2, AZ3) is respectively updated for each second virtual runtime environment.

9. Method according to one of the preceding patent claims,
**characterized**
**in that** the virtualization software updates the content of a memory cell (AZ1, AZ2, AZ3), which can be read by the real-time operating system (RTOS1, RTOS2, RTOS3), by incrementing a numerical value stored in this memory cell (AZ1, AZ2, AZ3).

10. Virtualization software for a data processing device having a plurality of processor cores (CORE0, CORE1, CORE2, CORE3), a general-purpose operating system (GPOS) and at least one real-time operating system (RTOS1, RTOS2, RTOS3),
**characterized**
**in that** the virtualization software is set up to configure the data processing device for the operation of a method according to one of the preceding claims,
the virtualization software being set up to update the at least one memory cell (AZ1, AZ2, AZ3) used as an independent time source after an interrupt (INT) initiated by the second time source (RTC).

## Revendications

1. Procédé de mise à disposition d'au moins deux sources temporelles, indépendantes l'une de l'autre, pour au moins un système (RTOS1, RTOS2, RTOS3) d'exploitation en temps réel d'un appareil informatique ayant au moins deux contextes virtuels de temps d'exécution,
dans lequel, dans un premier des contextes virtuels de temps d'exécution, un système (GPOS) d'exploitation générale et, dans un deuxième des contextes virtuels de temps d'exécution, le système (RTOS1, RTOS2, RTOS3) d'exploitation en temps réel se déroulent,
dans lequel on gère les contextes virtuels de temps d'exécution par un logiciel de virtualisation et
dans lequel on affecte, au premier contexte virtuel de temps d'exécution, un premier noyau (COR0) de processeur et, au deuxième contexte virtuel de temps d'exécution, un deuxième noyau (CORE1, CORE2, CORE3) de processeur,
**caractérisé**
**en ce que** l'on affecte exclusivement une première source (TSC1, TSC2, TSC3) temporelle au au moins un système (RTOS1, RTOS2, RTOS3) d'exploitation en temps réel,
**en ce que** l'appareil informatique a une deuxième source (RTC) temporelle indépendante de la première source (TSC1, TSC2, TSC3) temporelle, dans lequel
la deuxième source temporelle est configurée pour produire périodiquement une interruption (INT), dans lequel le premier noyau (CORE0) de processeur ayant le contexte virtuel de temps d'exécution est conçu avec le système
(GPOS) d'exploitation générale, de manière à entrer, à chaque interruption (INT) déclenchée par la deuxième source (RTC) temporelle, dans le logiciel de virtualisation, dans lequel
le logiciel de virtualisation met à jour le contenu d'au moins une cellule (AZ1, AZ2, AZ3) de mémoire pouvant être déchiffrée par le système (RTOS1, RTOS2, RTOS3) d'exploitation en temps réel, le système (RTOS1, RTOS2, RTOS3) d'exploitation en temps réel utilisant cette cellule (AZ1, AZ2, AZ3) de mémoire, comme source temporelle indépendante de la première source (TSC1, TSC2, TSC3) temporelle.

2. Procédé suivant la revendication 1,
**caractérisé**
**en ce que** la deuxième source temporelle est conçue pour produire périodiquement un signal (INIT), comme signal de début ou une interruption (INT) configurée en interruption non masquable.

3. Procédé suivant l'une des revendications précédentes,
**caractérisé**
**en ce que** l'on utilise comme première source (TSC1, TSC2, TSC3) temporelle un time-stamp-counter (TSC1, TSC2, TSC3) du noyau (CORE1, CORE2, CORE3) de processeur, sur lequel se déroule le deuxième contexte virtuel de temps d'exécution, par le système (RTOS1, RTOS2, RTOS3) d'exploitation en temps réel.

4. Procédé suivant l'une des revendications précédentes,
**caractérisé**
**en ce que** l'on utilise comme deuxième source (RTC) temporelle un module d'horloge en temps réel de l'appareil informatique.

5. Procédé suivant la revendication 4,
**caractérisé**
**en ce que** l'on utilise le logiciel de virtualisation pour virtualiser le module (RTC) d'horloge en temps réel par rapport au premier contexte virtuel de temps d'exécution.

6. Procédé suivant l'une des revendications précédentes,
**caractérisé**
**en ce que** l'on utilise le logiciel de virtualisation pour virtualiser l'unité (IO-APIC) de commande d'interruption par rapport au système (GPOS) d'exploitation générale.

7. Procédé suivant l'une des revendications précédentes,
**caractérisé**
**en ce que** l'on configure, sur le dispositif informatique, plusieurs deuxièmes contextes virtuels de temps d'exécution, par respectivement un système (RTOS1, RTOS2, RTOS3) d'exploitation en temps réel, un noyau (CORE1, CORE2, CORE3) de processeur propre étant affecté à chacun de ces deuxièmes contextes virtuels de temps d'exécution.

8. Procédé suivant la revendication 7,
**caractérisé**
**en ce que**, pour chaque deuxième contexte virtuel de temps d'exécution, on met à jour respectivement au moins une cellule (AZ1, AZ2, AZ3) de mémoire distincte.

9. Procédé suivant l'une des revendications précédentes,
**caractérisé**
**en ce que** le logiciel de virtualisation met à jour le contenu d'une cellule (AZ1, AZ2, AZ3) de mémoire déchiffrable, par le système (RTOS1, RTOS2, RTOS3) d'exploitation en temps réel, par l'incrémentation d'une valeur numérique mémorisée dans cette cellule (AZ1, AZ2, AZ3) de mémoire.

10. Logiciel de virtualisation pour un appareil informatique ayant plusieurs noyaux (CORE0, CORE1, CORE2, CORE3) de processeur, un système (GPOS) d'exploitation générale et au moins un système (RTOS1, RTOS2, RTOS3) d'exploitation en temps réel,
**caractérisé**
**en ce que** le logiciel de virtualisation est conçu pour configurer l'appareil informatique pour la mise en oeuvre d'un procédé suivant l'une des revendications précédentes,
le logiciel de virtualisation étant conçu pour la mise à jour de la au moins une cellule (AZ1, AZ2, AZ3) de mémoire utilisée comme source temporelle indépendante, après une interruption (INT) initiée par la deuxième source (RTC) temporelle.
